# EUROPÄISCHE PATENTSCHRIFT

(11) **EP 2 236 679 B1**
(45) Veröffentlichungstag und Bekanntmachung des Hinweises auf die Patenterteilung: **29.10.2014**
(21) Anmeldenummer: 10000914.1
(22) Anmeldetag: 29.01.2010
(51) Int. Cl.: E02F 5/00, E02F 7/02, E02F 3/88, E02F 3/92, E02F 7/04, B63B 1/10, E02F 3/90, B63B 1/12, E02F 9/06

(54) **Schleppkopfsaugbagger**
Trailing suction dredger
Drague suceuse autoporteuse

(30) Priorität: 12.06.2009 DE 102009015203
(43) Veröffentlichungstag der Anmeldung: 06.10.2010
(73) Patentinhaber: Bolls, Thorsten, 25725 Schafstedt (DE)
(72) Erfinder: Bolls, Thorsten, 25725 Schafstedt (DE)
(74) Vertreter: Horak, Michael

(56) Entgegenhaltungen:
- EP-A1- 0 606 153
- WO-A1-89/00630
- WO-A1-95/21303
- WO-A2-93/05243
- BE-A1- 836 661
- DE-A1- 2 808 489
- DE-A1- 2 930 745
- DE-A1-102005 045 407
- DE-C1- 10 119 857
- FR-A1- 2 702 785
- FR-A5- 2 101 559
- JP-A- S59 233 031
- US-A- 3 352 035
- US-A- 3 973 512

## Beschreibung

Die vorliegende Erfindung betrifft einen Schleppkopfsaugbagger zur Förderung von Sedimenten und ein Verfahren zur Förderung von Baggergut, vorzugsweise von Sedimenten auf Gewässersohlen, deren Beseitigung und Abtransport und/oder Verklappung.

Derartige, auf dem Gewässergrund von See- oder Flussgebieten durch Baggerschiffe durchzuführende Baggerverfahren, dienen im Wesentlichen der Ausbildung und Instandhaltung von für den reibungslosen Schiffsverkehr erforderlichen Wassertiefen in Seehäfen und deren Einzugsgebiet und auf Wasserstraßen oder in Mündungsgebieten von schiffbaren Flüssen. Dabei erfolgt die Aufnahme und Förderung von Sedimenten vorzugsweise in Form einer Feststoff-Wassersuspension von der Gewässersohle.

Bei solchen Nassbaggermaßnahmen können verschiedene Verfahren zur Anwendung gelangen. So werden beispielsweise landgestützte Bagger- und Schrapperanlagen, vorzugsweise sowohl zur Kiesförderung, wie auch zur Ausbaggerung und Reinhaltung kleinerer Seen, Flussläufe und Kanäle verwendet, während Schwimmbagger oder Baggerschiffe vor allem in größeren Flussläufen, Gewässern, Meeresbuchten oder Seehäfen eingesetzt werden.
Dabei erfolgen die mittels Baggerschiffstechnik durchzuführende Nassbaggerarbeiten unter Einsatz konzeptionell unterschiedlicher Gerätetechnik.

Hierbei wird insbesondere -zwischen zwei sehr verbreiteten Baggerschiffstypen und deren praktischen Baggerverfahren unterschieden, den Eimerkettenbaggern und Schleppkopfsaugbaggern. Während bei Eimerkettenbaggern das Baggergut durch eine endlose Kette von Eimern auf dem Gewässergrund abgegraben und in den Laderaum des Baggerschiffs befördert wird, erfolgt dessen Förderung durch ein Schleppkopfsaugbaggerschiff über eine Saugleitung und einen daran angebrachten und über den Seeboden gezogenen Saugschleppkopf. Die in unterschiedlichen Strukturen und Zusammensetzungen aufgenommenen Sedimente werden meist mit Hilfe des Trägermediums Wasser von der Gewässersohle in den Schiffskörper gesaugt und in großen Laderäumen zum Abtransport gelagert. Überschüssiges Wasser oder eine dünne Sediment-Wassersuspension können dem Gewässer durch entsprechende Öffnungen als Amob wieder zugeführt werden.
Enthält die Gewässersohle einen hohen Anteil von Schlick, Schluff und Feinsand, so ist das Verfahren der Schleppkopfsaugbaggerung zur Herstellung der gewünschten Solltiefen besonders gut geeignet, da diese In einfacher Art als Feststoff-Wassersuspension förderbar sind.

Im Unterschied zur Arbeitsweise von Cutterbaggern, bei dem die Sedimente durch einen als Fräßkopf ausgebildeten Saugkopf auf dem Seeboden zuerst gelockert und danach über die Saugleitung sauggefördert werden, erfolgt die Lockerung und die Aufnahme der Sedimente beim Schleppkopfsaugbagger, der auch als Hopperbagger bezeichnet wird, durch einen Schleppkopf bei langsamer Vorwärtsfahrt des Baggerschiffes.

Schleppkopfsaugbagger verfügen dabei über eine leistungsstarke Saugleitung, welche vom tragenden Schiffskörper zum Seeboden absenkbar angeordnet ist. Das seeseitige Ende der Saugleitung ist dabei mit einem Saugschleppkopf ausgestattet. Häufig dienen zusätzliche am Schleppkopf angeordnete Wasserdüsen zur Erzeugung eines Schneidstrahls zur besseren Auflockerung der abzusaugenden Sedimentschichten und fördern die Ausbildung einer fließfähigen Feststoff-Wassersuspension.

Der Transport solcher Feststoff-Wassersuspension aus der Seetiefe auf die Schiffsoberfläche erfolgt durch mehrere, mit dem schiffseitigen Ende der Saugleitung verbundenen leistungsstarken Baggerpumpen. Die an Bord geförderte Sediment-Wassersuspension wird in Laderäume verbracht und anschließend meist auf Schuten zum Abtransport auf vorbestimmte Lagerstätten an Land verladen. Kontaminierte Sedimente müssen allerdings auf spezielle, dafür vorgesehene -landgestützte Deponien verbracht werden.

Im Laderaum setzen sich die in suspendierter Lösung befindlichen Feststoffteilchen am Boden ab, so dass die oberen Schichten ein dünnes Suspensionsgemisch (Amob) mit einem hohen Wasseranteil bilden. Zur Verdichtung des Sedimentanteils in der Suspension und Optimierung des Transportaufwandes wird das Amob abgetrennt und mittels entsprechender Überlauföffnungen im Laderaum zurück ins Seewasser verbracht.

Die im Laderaum eines derartigen, auch als Laderaumsaugbagger bezeichneten Baggerschiffs verbliebenen und verdichteten festen Bestandteile des Baggerguts werden dann entweder über eine Schutenbeladungseinrichtung in Schuten umgeladen und zu geeigneten Spühlfeldem transportiert oder durch den Laderaumsaugbagger selbst abtransportiert.
Zum Entladen eines Laderaumsaugbaggers gibt es in der Regel mehrere Möglichkeiten, so etwa durch Öffnen von dafür vorgesehenen Bodenklappen oder mittels einer Pipeline, die von Land an das Schiff angekoppelt wird. Oftmals ist auch ein direktes Aufspülen des Baggerguts mit einer Wasserkanone am Bug des Laderaumsaugbaggers auf einen vorgesehenen Lagerpplatz möglich.
Das Verbringen des Baggergutes durch die Laderaumsaugbagger oder der von diesem befüllten Schuten, ist allerdings sehr kosten- und zeitaufwendig.
Es müssen viele Tonnen Baggergut über relativ weite Strecken transportiert und entladen werden. Neben den allgemeine hohen Treibstoffkosten für die Transportfahrten, muss das Baggerschiff seine Arbeit im Einsatzgebiet für längere Zeit unterbrechen.
Zur Verbesserung der Effizienz dieser bekannten Laderaumsaugbaggerverfahren und der dazu verwendeten Technik, wurden zahlreiche Vorschläge gemacht und zum Teil praktisch realisiert.
So wird in der DE 2448308 C2 eine spezielle Vorrichtung zum Absaugen einer Feststoff-Wassersuspension vom Gewässergrund in den Laderaum eines Schiffes mit Hilfe von Druckwasser vorgestellt. Dabei wird das Druckwasser im Wesentlichen der geförderten Sediment-Wassersuspension entnommen und dem Saugkopf mittels zusätzlicher Druckwasserleitung als Transportmedium erneut zugeführt.
Durch diese Rezirkulation des Transportmediums soll das Losspühlen des aufzunehmenden Bodens effektiver werden.

Allerdings müssen die geförderten Sedimente hier ebenfalls arbeits-, kosten und zeitaufwendig über weite Strecken transportiert und entsorgt werden.

Ein weiteres bekanntes Verfahren zur Herstellung und Erhaltung von Solltiefen in Fahrrinnen betrifft die Wasserinjektion unmittelbar in die Sedimentschicht des Bearbeitungsgrundes.
Das Prinzip des Wasserinjektionsverfahrens beruht auf der Suspensierung von Sedimentmaterial direkt an der Gewässersohle durch Aufwirbelung der Sedimente mittels eines vieldüsigem Wasserstrahls.
Das Baggergut wird in diesem Verfahren nicht wie in den meist bekannten anderen Verfahren an Bord eines Baggerschiffs verbracht, sondern verbleibt in der Gewässersohle, allerdings nicht in der bearbeiteten Fahrrinne, sondern wird durch die mittels der WasserInjektion erzeugte Dichteströmung in die nähere Umgebung des Gewässergrunds verdriftet.

Bei einer derartigen Wasserinjektionsbaggerung wird ein vom Schiffsbagger ausgelegtes Injektionsrohr, welches meist eine Vielzahl von Wasserstrahldüsen in geringem Abstand zueinander aufweist, quer zur Fahrtrichtung in geringem Abstand über die Gewässersohle geführt. Durch die Düsen wird eine große Wassermenge mit relativ geringem Druck in das auf der Gewässersohle befindliche Sediment derart eingetragen, dass sich auf der Gewässersohle eine Suspensionsschicht aus Sediment und Wasser bildet, welche einem driftartigen Abtransport durch Dichteströmung unterliegt.
Ist also der Dichteunterschied zwischen dem Wasser-Sediment-Gemisch und dem umgebenden Wasserkörper groß genug, setzt sich die Sediment-Suspension unter der Einwirkung von hydrodynamischen Kräften in Bewegung und verteilt sich in die umgebenden Bereiche der bearbeiteten Fahrrinne. Allerdings sind die mit diesem Verfahren zu erreichenden Entfernungen für eine Sedimentverdriftung nicht allzu groß und beschränken sich meist nur auf die nähere Umgebung in der Länge der Fahrrinne.
Die Angaben aus der Literatur zu den erreichten Transportstrecken des remobilisierten Sedimentmaterials sind dabei teilweise sehr abweichend und reichten von den geringen Entfernungen weniger Meter bis zu Transportstrecken von einigen Kilometern.
Die Dichteströmung der suspendierten Sedimente erreicht dabei im Durchschnitt eine Größenordnung von 1 bis 3 Metern über der Gewässersohle Ein ähnliches Verfahren zur Bewegung von Material am Boden eines Gewässers durch zielgerichtete Wasserströmungen ist aus dem EP0606153 B1 bekannt.
Die hierzu verwendete Technik zu Lösen des Bodenmaterials ist an einem Schiffskörper mit zwei Rümpfen oder Katamaran montiert und besteht aus mehreren Propellerschrauben, welche steuerbare Wasserströmungen erzeugern, die durch bewegliche Leitbleche auf die zu lockernden und entfernenden Bodenschichten gerichtet werden. Die Bewegungen der Sedimente in die gewünschten Ablagerungsbereiche wird dabei vorzugsweise in Form von Unterdruckwellen erzeugt.
Das Wasserinjektionsverfahren ist wegen seiner eher recht geringen Bearbeitungsfläche allerdings nur für kleinere begrenzte Gewässersohlen vorteilhaft einsetzbar. Der in vielen Fällen recht geringe Verdriftungsbereich der wasserinjizierten Sedimentschicht verhindert dessen sinnvollen Einsatz in großflächigeren -Seebereichen oder Hafenanlagen.
Demgegenüber entstehen bei der Laderaumtransportbaggerung hohe Kosten durch die Aufnahme und das Abfahren und der anfallenden Sedimente.

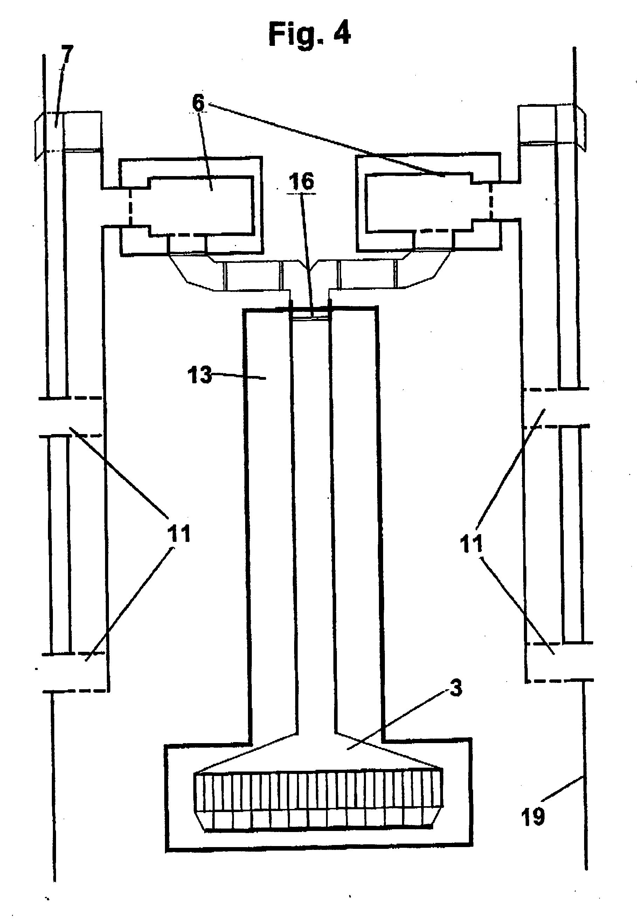

Aus der Patenschrift Fr 2101559 ist ein Saugbaggerschiff bekannt, weiches im Heckteil eine Öffnung zum Absenken des Schleppsaugkopfes aufweist und im Wesentlichen zur Baggerung von Schifffahrtsrinnen und Verlegen von Seekabeln oder Rohren geeignet ist. Das Baggergut wird hier in eine (seitlich) verschiebbare Rutschenrinne zur weiteren Entsorgung auf Lastkähne gefördert. Dabei können verschiedene, seitlich voneinander beabstandete Saugrohrleitungen 4 nacheinander zur Saugbaggerung verwendet werden.
Auf Grund seiner Zweckbestimmung, zur Unterwasserverlegung von Rohren oder Seekabeln ist das hier beschriebene Saugbaggerschiff insbesondere zur Baggerung schmaler Rinnen (Fig. 4) in flachen Flussläufen oder Gewässern geeignet. Aufgabe der vorliegenden Erfindung ist es daher, einen Schleppkopfsaugbagger zur Sedimentbaggerung vorzuschlagen, welcher insbesondere kostengünstig -zur Bearbeitung größerer Gewässersohlen in See- oder Meergebieten geeignet ist. Weiterhin soll ein Verfahren zur Ausführung der Sedimentbaggerung mit einem Schleppkopfsaugbagger angegeben werden.

Diese Aufgabe wird durch die kennzeichnenden Merkmale des ersten Patentanspruchs gelöst. In den Unteransprüchen sind weitere vorteilhafte Ausgestaltungen der Erfindung angegeben.

Gemäß Patentanspruch 1, wird ein Schleppkopfsaugbagger zur Förderung von Sedimenten aus einem zu bearbeitenden Gewässergrund mit einer oder mehreren Baggerpumpen angegeben, welche über eine Saugrohrleitung und einem über den Gewässergrund zu ziehenden Saugschleppkopf verbunden sind.
Efindungsgemäß ist der Schleppkopfsaugbagger als Katamaran oder Doppelrumpfschiff ausgebildet ist, welches zwischen den beiden Rümpfen eine Seeöffnung aufweist, durch welche eine Saugrohrleitung mit dem Saugschleppkopf zum Gewässergrund absenkbar ausgebildet ist und mindestens ein über die Baggerpumpen mit der Saugrohleitung verbundenes Abförderleitungssystem vorgesehen ist, welches mindestens einen Sediment-Transportauslass und mindestens eine Schutenbeladeeinrichtung aufweist.

Das mit diesem derart ausgebildeten Schleppkopfsaugbagger ausführbare Verfahren zur Sedimentbaggerung ist durch die Verdriftung des als Sediment-Wassersuspension geförderten Baggergutes in eine entferntere großflächigere Umgebung des bearbeiteten Gewässergrundes charakterisiert, oder dessen Verbringung mittels einer Schutenbeladeeinrichtung auf backbordseitige oder steuerbordseitige Schuten, wobei je nach Anfall auch das geförderte Amob über den Sediment-Transportauslass verdriftbar sind.
Bei der Verdriftung transportieren eine oder mehrere, an die Baggerpumpen des Schleppkopfsaugbaggers angeschlossene Sediment-Transportauslässe die geförderten Sediment-Wassersuspensionen in die oberen Gewässerschichten der Umgebung des Schiffkörpers zurück. Die sich in Suspension befindlichen Sedimente treiben dann mit der Tide und unter dem Einfluss natürlicher Meeresströmungen in weiter entfernte Seegebiete und setzen sich dort großflächig wieder ab.
Im Gegensatz zur Wasserinjektionsbaggerung, oder der Lösung von Sedimenten mit Unterdruckwellen, deren Dichteströmung nur geringförmig über der Gewässersohle stattfindet, ermöglicht die Sedimentverdriftung des erfindungsgemäßen Sediment-Transport-Verfahrens eine wesentlich größer Verteilung der geförderten Sedimente in der Breite. Da sich der Ausgangspunkt der Sedimentverdriftung bei diesem-Verfahren an der Gewässeroberfläche befindet, steht im Gegensatz zur Wasserinjektion eine erheblich größere Wassertiefe für das Strömungsdriften der Sedimente zur Verfügung.

Der zur Durchführung dieses Verfahrens vorteilhaft verwendbare Schleppkopfsaugbagger ist erfindungsgemäß als Katamaran oder Doppelrumpfschiff ausgebildet, welches zwischen den beiden Rümpfen eine Seeöffnung aufweist, durch die eine Saugrohrleitung mit einem Saugschleppkopf zum Gewässergrund absenkbar ist.

Dabei ist der als Katamaran ausgebildete Schleppkopfsaugbagger erfindungsgemäß mit mindestens einem über die Baggerpumpen mit der Saugrohleitung verbundenem Abförderleitungssystem ausgestattet, dass zur Abförderung der Sedimente mindestens einen Sediment-Transportauslass zur Verdriftung in die oberflächennahe Wasserschichten aufweist. Wobei mindestens eine Schutenbeladeeinrichtung zur Beladung von backbord- und/oder steuerbordseitig anlegenden Schuten vorgesehen ist.

In einer vorteilhaften Weiterbildung der Erfindung sind der jeweilige Sediment-Transportauslass und ein- oder mehrere Schutenbeladeeinrichtungen des Abförderleitungssystems über ein gemeinsames Verteilerrohr miteinander und mit den Baggerpumpen verbunden. Dabei weist das Abförderleitungssystem erfindungsgemäß mehrere Schieber auf, welche das von den Baggerpumpen als Sedimente geförderte Baggergut wahlweise nach Steuerbord oder Backbord zur Beladung von Schuten, als Amob oder als Sediment-Wassersuspension zum Sediment-Transportauslass leiten.

Die Erfindung soll nun anhand eines Ausführungsbeispiels und der Figuren. 1 bis 5 näher erläutert werden.

Es zeigen:
Fig. 1 eine schematische Darstellung des erfindungsgemäßen Sediment-Transport-Baggerverfahrens,
Fig. 2 die Darstellung eines erfindungsgemäßen Schleppkopfsaugbaggers 1 zur Durchführung des Verfahrens,
Fig. 3 das Rohrsystem 2 (Saugrohrleitung) mit Verschlussvariante A 15 des Schleppkopfsaugbaggers mit einem Abförderleitungssystem 10 und den Sediment-Transportauslässen 7,
Fig. 4 das Rohrsystem 2 mit Verschlussvariante C 16,
Fig. 5 das Rohrsystem 2 mit Verschlussvariante B 20, mit geteilter Saugrohrleitung 2 und geteiltem Saugschleppkopf 3.

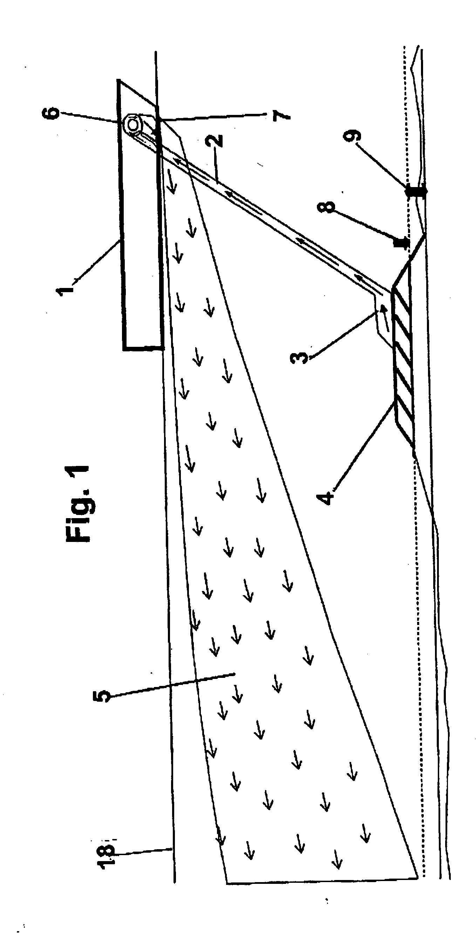

Der erfindungsgemäße Schleppkopfsaugbagger und das erfindungsgemäße Sediment-Transport-Baggerverfahren sind besonders vorteilhaft für die Anwendung in Hochseehäfen, Küstengebieten größerer Gewässer und großen schiffbaren Flussmündungen anwendbar, da hier genügend Raum zum Absetzen des mittels Sedimentverdriftung geförderten Baggerguts 5 zur Verfügung steht. Weiterhin sollte in der zu bearbeitenden Gewässersohle 9 eine bestimmte Strömungsdriftung des Seewassers und insbesondere ein ausreichender, durch die Gehzeiten verursachter Tidehub mit seinen umfangreichen Wasserströmungen vorliegen.
Diese Strömungen gewährleisten und fördern den gewünschten Sediment-Transport von den Auslässen 7 des Schleppkopfsaugbaggers 1 in größere Entfernungen. Wie in Fig. 1 dargestellt, werden Sedimente vorzugsweise mit einen hohen Anteil an Schlick, Schluff und Feinsand vom Gewässergrund 4 durch einen Saugschleppkopf 3 auf eine Solltiefe 8 abgesaugt. Das Niveau der Gewässersohle 9 befindet sich dabei unter der Solltiefe 8. Das über eine Saugrohrleitung 2 geförderte Sediment, bildet durch den ebenfalls mit eingesaugten Wasseranteil eine gut fließfähige Sediment-Wassersuspension 5 aus. Diese wird nach der Förderung erfingdungsgemäß über entsprechende Sedimant-Transportauslässe 7 zurück in die Oberflächengewässer um das Baggerschiff rezirkuliert. Entsprechend der verwendeten Förderhöhe mittels Saugrohrleitung 2 und der herrschenden Strömungsverhältnisse driftet das Sediment bis in größere Entfernungen von der Baggerstelle. Es verteilt sich in breiten Seebereichen und setzt sich an der dortigen Gewässersohle 9 ab, so dass es den Schiffsverkehr über der abgesaugten Gewässersohle nicht mehr behindert.

Mit diesem erfinderischen Schleppkopfsaugbagger und dem Sediment-Transport-Baggerverfahren können Einzeluntiefen schneller und billiger abgearbeitet werden als mit anderen bekannten Verfahren, da keine Kosten für die Vollfahrt, die Verklappung und weniger Kosten für die Leerfahrt anfallen. Neue Baggerstellen können daher schneller angefahren und abgearbeitet werden. Auch mittlere und große Baggerstellen können nach diesem Verfahren vorteilhaft bearbeitet werden. Erfindungsgemäß kann bei Bedarf schnell auf die Beladung von Schuten umgestellt werden oder beide Sediment-Transportarten können parallel verwendet werden.

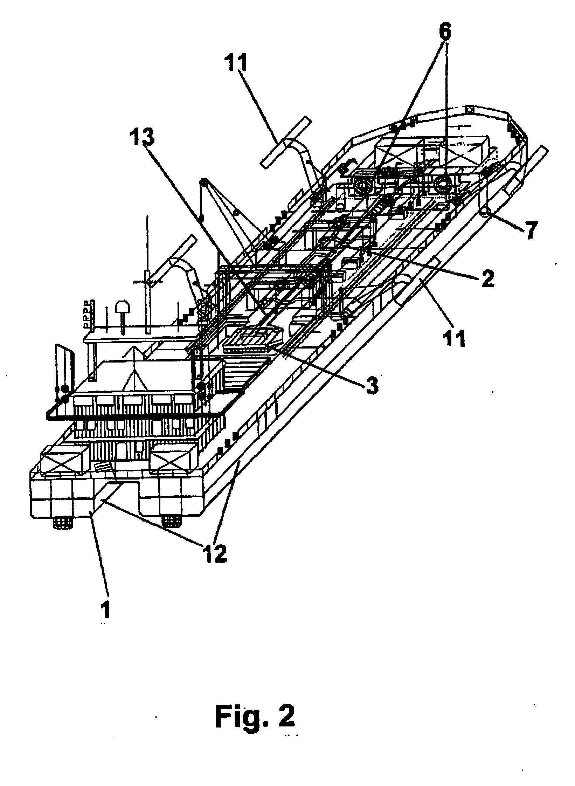

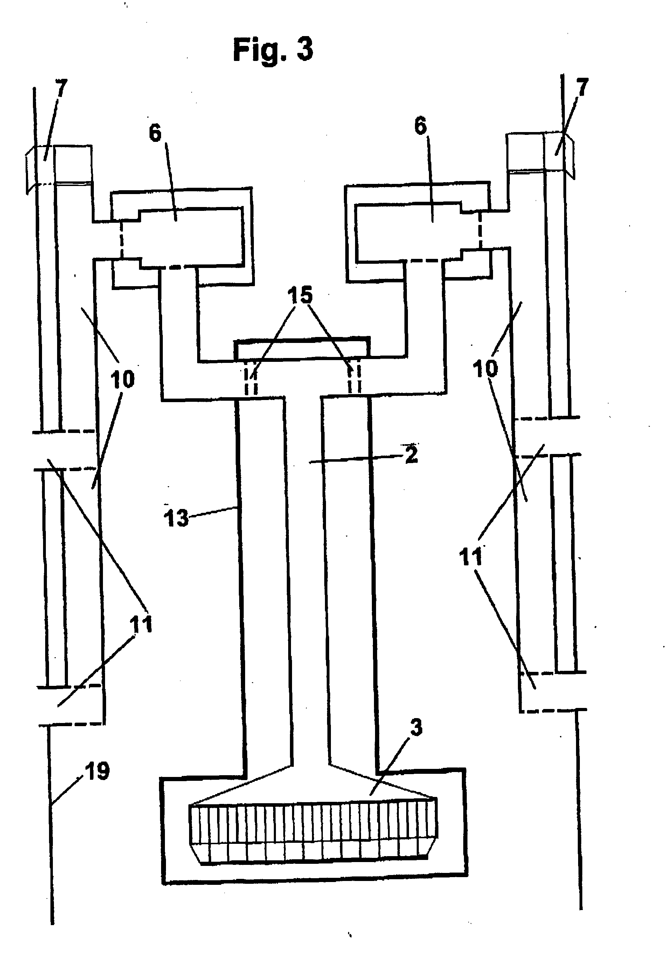

Ein weiterer, wesentlicher Gegenstand der Erfindung besteht in der Ausbildung eines Schleppkopfsaugbaggers 1, der zur Durchführung des Sediment-Transport-Verfahrens mittels Sedimentverdriflung geeignet ist. Der Schleppkopfsaugbagger ist dazu als Katamaran- oder Doppelrumpfschiff 12 ausgebildet (Fig.2) und verfügt über erfinderisch angeordnete Sediment-Transportauslässe 7 im vorderen Schiffsteil. Zwischen den beiden Schiffsrümpfen ist eine sich in Längsrichtung des Schiffkörpers erstreckende Seeöffnung 13 ausgebildet, welche in der Länge und den Abmessungen entsprechend der Saugrohrleitung 2 mit dem Saugschleppkopf 3 dimensioniert ist. Die Saugleitung 2 und der Schleppkopf 3 werden durch mehrere Brückenaufbauten gehalten und positioniert und sind gemäß Fig. 2 mittels, an sich bekannter Hebezeuge und Kräne zum Gewässergrund 4 absenkbar ausgebildet. Im Bugdrittel dieses Doppelrumpfschiffes 12 sind zwei leistungsstarke Baggerpumpen 6a und 6b, vorzugsweise Kreiselpumpen angeordnet und über einen Saugrohrverschluss 14 mit der Saugrohrleitung 2 verbunden. Sowohl auf der Backbordseite wie auch auf der Steuerbordseite des Schiffes 12 sind jeweils ein erfinderischer Auslass 7 zur Sedimentverdriftung in oberen Wasserschichten vorgesehen. Gemäß der Darstellungen in Fig. 3 bis Fig. 5 sind beide Sediment-Transportauslässe 7 auf der Bugseite in ein Abförderleitungssystem 10 integriert. Neben den, in unmittelbarer Nähe der Baggerpumpen 6 befindlichen Sediment-Transportauslässen 7 umfasst das Abförderleitungssystem 10 auf jeder Schiffseite zwei Schutenbeladeeinrichtungen 11. Dabei kann die Anzahl der vorzusehenden Schutenbeladeeinrichtungen 11 entsprechend dem Einsatzzweck variabel gestaltet werden, also bei kleineren Schiffen beispielsweise nur eine Schutenbeladeeinrichtung 11 vorgesehen sein. Wie aus den Fig. 3 bis 5 ersichtlich, sind der Sediment-Transportauslass 7 und die Schutenbeladeeinrichtungen 11 durch das Abförderleitungssystem 10 miteinander gekoppelt und jeweils durch mehrere Schieber einzeln zu betreiben und absperrbar. Dadurch ist es möglich, dass das von den Baggerpumpen 6a und 6b vorzugsweise als Sedimente geförderte Baggergut 5 wahlweise nach Steuerbord oder Backbord zur Beladung von Schuten 11 oder als Amob oder Sediment-Wassersuspension 5 zum Sediment-Transportauslass 7 geleitet wird.
In einer vorteilhaften Weiterbildung der Erfindung, ist zur Absperrung eines oder beider Saugrohrstränge zwischen der Saugrohrleitung 2 und den Baggerpumpen 6 ein Saugrohrverschluss 14 angeordnet. Gemäß der in Fig. 3 dargestellten Absperrvariante A, ist der Saugrohrverschluss als T-Stück-Verschluss 15 ausgebildet. Mittels dieser Schieberregelung 15 kann der Durchlass der beiden von der Saugrohrleitung 2 abgehenden Rohrstränge zu den Baggerpumpen 6 derart geregelt werden, dass beide gemeinsam oder einzeln betreibbar sind oder die vollständige Absperrung der Saugleitung 2 gegenüber den Baggerpumpen 6 ermöglicht wird.

In der in Fig. 4 dargestellten Absperrvariante C ist der Saugrohrverschluss 14 als Saugrohrzentralverschluss 16 ausgebildet und direkt in der Saugrohrleitung 2 vor der Aufspaltung in die beiden Saugrohrstränge zu den Baggerpumpen 6a und 6b angeordnet.

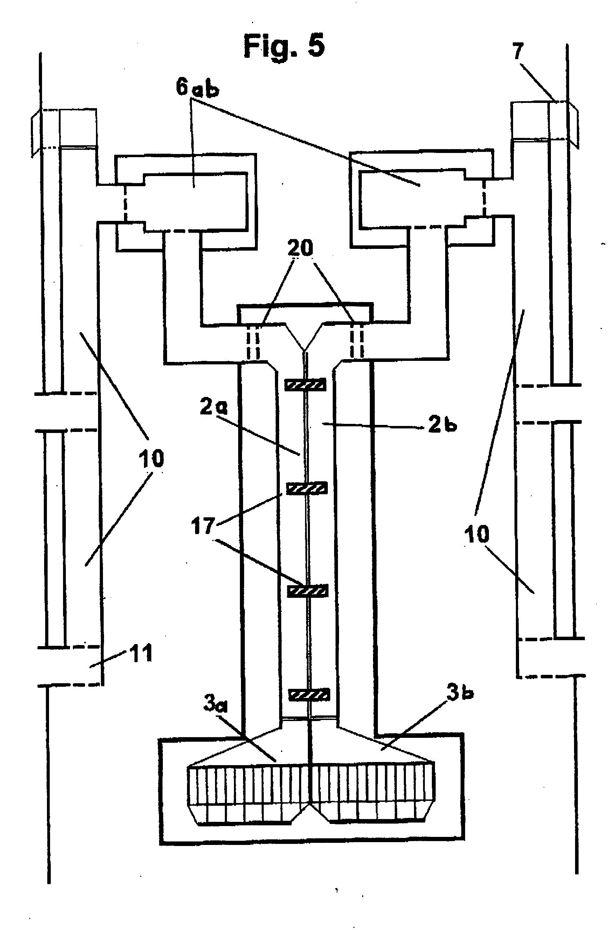

Bei dem in Fig. 5 dargestellten Saugrohrsystem der Absperrvariante B, wird die Saugrohrleitung 2 in zwei voneinander getrennte Saugrohrleitungen 2a, 2b weitergebildet, denen jeweils ein eigener Saugschleppkopf 3a, 3b zugeordnet ist. In dieser besonders vorteilhaften Weiterbildung der Erfindung können beide Saugrohrleitungen 2a, 2b und deren Saugschleppköpfe 3a, 3b unabhängig voneinander zur Förderung von Sedimenten vom Gewässergrund 4 verwendet werden. Die beiden Saugrohrleitungen 2a, 2b sind dabei durch mehrere spezielle Saugrohrverbindungselemente 17 miteinander verbunden. Der Schleppsaugkopf 3 ist in diesem Saugrohrsystem in seinem inneren Aufbau zweigeteilt, so dass es sich um zwei unabhängig voneinander angeordnete, aber trotzdem durch das doppelte Saugrohr um miteinander verbundene Saugleitungen handelt. Hierdurch ist es möglich auch mit nur jeweilis einem System zu baggern.

Der Schiffskörper des beispielhaft in Fig. 2 dargestellten Schleppkopfsaugbaggers 12, weist erfindungsgemäß zwei Rümpfe auf, über denen sich die Aufbauten des Hauptdecks befinden. Die Länge des Schiffskörpers beträgt hier beispielsweise 70 m bei einer Breite von 25 m. Das Schiff hat einen Tiefgang von etwa 2,5 m und einen Freibord von etwa 2,0 m. In der Mitte dieses Katamaran-Schleppkopfsaugbaggers 12 ist eine etwa 4 m Breite und 30 m lange Seeöffnung 13 zur Absenkung des Saugschleppkopfs 3 vorgesehen. Diese Seeöffnung 13 erweitert sich am heckseitigen Ende auf etwa 8 m Breite und um zusätzlich 5 m Länge für den Saugschleppkopf 3-.
Der Antrieb des Schiffes besteht aus 4 VS Motoren, wobei jeweils zwei vom und zwei hinten angeordnet sind.
Die Auslässe 7 für die Sediment-Transport-Baggerung zur Oberflächenverdriftung der Sedimente befinden sich auf jeder Seite im vorderen Bereich des Schiffs und weisen vorzugsweise einen Durchmesser von ca. 1 m auf. Das aufgenommene Baggergut wird erfindungsgemäß sofort wieder zur Verdriftung in die oberflächennahen Wasserschichten ausgestoßen.

Insbesondere bei der Baggerung von mittleren und großen Baggerstellen kann bei Bedarf auf die Beladung von Schuten umgestellt werden. Dazu sind die entsprechenden Schieber des Abförderleitungssystems 10 zu betätigen um jeweils zwei Schutenbelader 11 im zweiten und dritten Viertel des Schiffes auf jeder Schiffseite zu aktivieren.

Da Schuten in der Regel nur einen Tiefgang von etwa 2,5 m haben, können auch außerhalb vom Fahrwasser liegende Klappstellen angefahren werden, insbesondere auch solche, die lange nicht benutzt wurden. Dadurch verkürzen sich die Förderwege und die Abarbeitungszeiten der Baggerstellen erheblich. Die Einsatzgebiete der erfindungsgemäßen Beladung von Schuten sind besonders Mittlere- und Einzeluntiefen mit Sand- und Weichsedimenten, sowie Große Baggerstellen mit Feinsanden und Weichsedimenten.
Gegenüber dem Einsatz von Wasserinjektionsgeräten (WI-Geräte) hat die erfinderische Sediment-Transport-Baggerung insbesondere den Vorteil, dass die Verteilung und der Transport der Sedimente in weitaus größere Bereiche und nicht nur in der Länge des Fahrweges, sondern auch in die Breite des Fahrwassers erfolgt. Das erfindungsgemäße Schleppkopfsaugbaggerschiff kann auch große Baggerstellen bearbeiten und bei Wellengang eingesetzt werden, was bei einem WI-Gerät, dass die Sedimente nicht weit genug transportieren kann und bei größeren Wellengang, insbesondere wegen der ständig wechselnden Wassertiefen nicht sinnvoll eingesetzt werden kann, nicht möglich ist.
Gegenüber den bekannten Laderaumsaugbaggern, kann der erfindungsgemäße Schleppkopfsaugbagger auch bei geringen Tiefen von etwa 4 m zum Einsatz kommen, da er keinen Laderaum hat, der mit schweren Sedimenten beladen ist und einen erhöhten Tiefgang erfordert.
Ein weiterer Vorteil gegenüber Laderaumsaugbaggern besteht in der Möglichkeit der sofortigen unkomplizierten Umstellung auf das erfindungsgemäße Sediment-Transport-Baggerverfahren.

Das erfindungsgemäße Sediment-Transport-Baggerverfahren und der erfindungsgemäße Schleppsaugkopfbagger zur Durchführung dieses Verfahrens ermöglichen dem Auftraggeber weiterhin ein beschleunigtes und kostengünstiges Abarbeiten der Baggerstellen, sowie deren variablen und gezielten Einsatz für unterschiedlichste Nassbaggerarbeiten.

### Bezugszeichen

- 1: Schleppkopfsaugbagger
- 2: Saugrohrleitung
- 2a: geteilte Saugrohrleitung a
- 2b: geteilte Saugrohrleitung b
- 3: Saugschleppkopf
- 3a: geteilter Saugschleppkopf a
- 3b: geteilter Saugschleppkopf b
- 4: Gewässergrund
- 5: Baggergut, Sediment-Wassersuspension
- 6: Baggerpumpe, Kreiselpumpe
- 6a: backbordseitige Baggerpumpe
- 6b: steuerbordseitige Baggerpumpe
- 7: Sediment-Transportauslass
- 8: Solltiefe
- 9: Gewässersohle
- 10: Abförderleitungssystem
- 11: Schutenbeladeeinrichtung, Schutenbelader
- 12: Katamaran- oder Doppelrumpfschiff (Schleppkopfsaugbagger)
- 13: Seeöffnung für die Saugrohrleitung mit Schleppkopf
- 14: Saugrohrverschluss (allgemein)
- 15: Saugrohrverschluss Variante A
- 16: Saugrohrzentralverschluss, Variante C
- 17: Saugrohrverbindungselemente
- 18: Gewässeroberfläche
- 19: Bordwand des Katamaran/Doppelrumpfschiffes (Schleppkopfsaugbagger)
- 20: Saugrohrverschluss Variante B

## Patentansprüche

1. Schleppkopfsaugbagger, zur Förderung von Sedimenten aus dem zu bearbeitenden Gewässergrund (4), mit einer oder mehreren Baggerpumpen (6), welche über eine Saugrohrleitung (2) und einem über den Gewässergrund(4) zu ziehenden Saugschleppkopf (3) verbunden sind,
**dadurch gekennzeichnet, dass**
er als Katamaran (12) oder Doppelrumpfschiff ausgebildet ist, welches zwischen den beiden Rümpfen eine Seeöffnung (13) aufweist, durch welche eine Saugrohrleitung (2) mit dem Saugschleppkopf (3) zum Gewässergrund (4) absenkbar ausgebildet und
mindestens ein über die Baggerpumpen (6) mit der Saugrohleitung (2) verbundenes Abförderleitungssystem (10) vorgesehen ist, welches mindestens einen Sediment-Transportauslass (7) und mindestens eine Schutenbeladeeinrichtung (11) aufweist.

2. Schleppkopfsaugbagger nach Anspruch 1,
**dadurch gekennzeichnet, dass**
der Sediment-Transportauslass (7) und ein- oder mehrere Schutenbeladeeinrichtungen (11) des Abförderleitungssystems (10) über ein Verteilerrohr miteinander und mit den Baggerpumpen (6) verbunden sind und dass ein- oder mehrere Schieber angeordnet sind, welche das von den Baggerpumpen (6a, 6b) vorzugsweise als Sedimente geförderte Baggergut wahlweise nach Steuerbord oder Backbord zur Beladung von Schuten (11) oder als Amob oder Sediment-Wassersuspension (5) zum Sediment-Transportauslass (7) geleitet wird.

3. Schleppkopfsaugbagger nach Anspruch 2 ,
**dadurch gekennzeichnet, dass**
die Saugrohrleitung (2) einen Saugrohrverschluss (15, 16) aufweist,
welcher die Absperrung der Saugrohrleitung (2) gegenüber den Baggerpumpen (6) ermöglicht.

4. Schleppkopfsaugbagger nach Anspruch 3,
**dadurch gekennzeichnet, dass**
der Saugrohnrerschluss- als T-Stück Verschluss (15) mit jeweils einer Sperrmöglichkeit zu der backbordseitigen Baggerpumpe (6a) und zu der steuerbordseitigen Baggerpumpe (6b) oder als Saugrohrzentralverschluss (16) in der Saugrohrleitung (2) ausgebildet ist, -wobei die einzelnen Leitungsstränge der Saugrohrleitung (2) zu den jeweiligen Baggerpumpen (6) gemeinsam oder einzeln verschließbar ausgebildet sind.

5. Schleppkopfsaugbagger nach Anspruch 4,
**dadurch gekennzeichnet, dass**
die Saugrohrleitung (2) als in zwei voneinander getrennte Saugrohrleitungen (2a, 2b) ausgebildet ist, denen jeweils ein eigener Saugschleppkopf (3a, 3b) zugeordnet ist, wobei beide Saugrohrleitungen (2a, 2b) und deren Saugschleppkopf (3a, 3b) unabhängig voneinander zur Förderung von Sedimenten einsetzbar sind.

6. Schleppkopfsaugbagger nach Anspruch 5,
**dadurch gekennzeichnet, dass**
die beiden Saugschleppköpfe (3a, 3b) ein gemeinsames Gehäuse aufweisen und in ihrem inneren Aufbau in zwei unabhängig voneinander getrennt betreibbare Saugköpfe geteilt sind, und das beide Saugrohrleitungen (2a, 2b) durch mehrere Saugrohrverbindungselemente (17) auf ihrer gesamten Länge miteinander verbunden sind.

7. Verfahren zur Schleppkopfsaugbaggerung von Gewässersohlen unter Verwendung eines Schleppkopfsaugbaggers nach einem oder mehreren der vorhergehenden Ansprüche,
**dadurch gekennzeichnet, dass**
die über ein Saugschleppkopf (3) und eine Saugrohrleitung (2) geförderten Sediment-Wassersuspensionen (5) über je ein Abförderleitungssystem (10) zu den auf jeder Schiffaußenseite befindlichen Sediment-Transportauslässe (7) gefördert und in die oberen Gewässerschichten zur Sedimentverdriftung zurückgeführt werden und/oder mittels der Schutenbeladeeinrichtung (11) auf backbordseitige oder steuerbordseitige Schuten verbracht werden, wobei je nach Anfall auch das geförderte Amob über den Sediment-Transportauslass (7) verdriftet wird.

8. Verfahren nach Anspruch 7,
**dadurch gekennzeichnet, dass**
das geförderte Baggergut (5) mittels der in den Abförderleitungssystem (10) und/oder am Auslassanschluss der Baggerpumpen (6) angeordneten Schieber nach Steuerbord oder Backbord, als Schutenbelader, Amob oder Sediment-Wassersuspension (5) geleitet wird.

## Claims

1. Trailing head suction dredger
for pumping sediments from the floor of a respective water body (4), having one or several dredging pumps (6) connected via a suction pipe (2) and a suction drag head (3) to be drawn across the floor of the respective water body (4), **characterised in that** it takes the form of a catamaran (12) or twin hull vessel which has a sea opening (13) between the two hulls through which a suction pipe (2) connects it to the suction drag head (3) which can be lowered to the floor of the respective water body (4) together with at least one dredged material conveyor system (10) and is connected via the dredging pump (6) with the suction pipe (2) or has at least one sediment transport outlet (7) and at least one barge loading system (11).

2. Trailing head suction dredger according to claim 1,
**characterised in that** the sediment transport outlet (7) and one or several barge loading systems (11) of the dredged material conveyor system (10) are connected with one another and with the dredging pumps (6) by a distribution pipe and that one or several gate valves are arranged which allow the dredged material, preferentially sediments, pumped by the dredging pumps (6a, 6b), to be selectively directed to the port or starboard side to load the barges (11) or as amob or as sediment water suspension (5) to the sediment transport outlet (7).

3. Trailing head suction dredger according to claim 2,
**characterised in that** the suction pipe (2) has a suction pipe cap (15, 16) which allows the closure of the suction pipe (2) to the dredging pumps (6).

4. Trailing head suction dredger according to claim 3,
**characterised in that** the suction pipe valve takes the form of a T-piece cap (15) which offers a option of closure to the port-side dredging pumps (6a) and to the starboard-side dredging pumps (6b) or is constructed as a centrally located suction pipe cap (16) in the suction pipe (2) through which means the individual pipe sections of the suction pipe (2) to the respective dredging pumps (6) can be closed together or individually.

5. Trailing head suction dredger according to claim 4,
**characterised in that** the suction pipe (2) comprises two separate suction pipes (2a, 2b) each of which is allocated to a separate suction drag head (3a, 3b), through which means both suction pipes (2a, 2b) and their respective suction drag heads (3a, 3b) can be operated independently of one another to dredge sediments.

6. Trailing head suction dredger according to claim 5,
**characterised in that** the two suction drag heads (3a, 3b) have a common housing with an internal construction allowing the two suction drag heads to be operated independently of one another and that the two suction pipes (2a, 2b) are connected with one another via several suction pipe connection elements (17) throughout the entire length.

7. Procedure for the dredging of the floors of water bodies using a trailing head suction dredger in accordance with one or several of the preceding claims,
**characterised in that** the sediment-water suspension (5), pumped via a suction drag head (3) and a suction pipe (2) for the suspension, is conveyed over a material transport system (10) on each side of the vessel to the sediment transport outlets (7) located respectively on each of the two ship's sides and which can be directed into the upper water layers for sediment drifting and/or using the barge loading system (11) into a barge attached on the port side or starboard side whereby depending upon quantity, the transported amob can also be drifted via the sediment transport outlet (7).

8. Procedure according to claim 7,
**characterised in that** the conveyed dredged material (5) is directed via the gate valves located in either the material transport system (10) and/or at the outlet connection of the dredging pumps (6) either to starboard or port side to barge loader, as amob or sediment-water suspension (5).

## Revendications

1. Drague porteuse
pour convoyer des sédiments à partir du fond de cours d'eau (4) à travailler, avec une ou plusieurs pompes de dragage (6) qui sont reliées par un tube d'aspiration (2) et une tête de dragage aspirante (3) à tirer au-dessus du fond du cours d'eau (4), caractérisée en cela qu'elle se présente sous forme de catamaran (12) ou bateau à double coque, qui présente entre les deux coques une ouverture maritime (13) à travers laquelle sont prévus un tube aspirant (2) avec la tête de dragage aspirante (3) pouvant être abaissée vers le fond du cours d'eau (4)et au moins un système d'évacuation (10) relié via les pompes de dragage (6) au tube aspirant (1) qui présente une sortie de transport des sédiments (7) et au moins un dispositif de chargement de la drague (11).

2. Drague porteuse selon la revendication 1
caractérisé en cela que la sortie de transport des sédiments (7) et un ou plusieurs dispositifs de chargement de la drague (11) du système d'évacuation (10) sont reliés entre eux via un tube de distribution et avec les pompes de dragage (6) et que un ou plusieurs coulisseaux sont placés qui conduisent la matière draguée, de préférence sous forme de sédiments, convoyée par les pompes de dragage (6a, 6b) au choix à bâbord ou à tribord pour charger les dragues (11) ou sous forme d'amob ou de suspension d'eau sédimentaires (5) vers la sortie de transport des sédiments (7).

3. Drague porteuse selon la revendication 2
caractérisée en cela que le tube aspirant (2) présente une fermeture (15, 16) qui permet le verrouillage du tube aspirant (2) vers les pompes de dragage (6).

4. Drague porteuse selon la revendication 3
caractérisée en cela que la fermeture du tube aspirant est formée comme une fermeture en T (15) avec respectivement une possibilité de verrouillage vers la pompe de dragage de bâbord (6a) et vers la pompe de dragage de tribord (6b) ou en tant que fermeture centrale du tube aspirant (16) dans le tube aspirant (2), les différentes voies du tube aspirant (2) vers les pompes de dragage (6) étant verrouillables ensemble ou individuellement.

5. Drague porteuse selon la revendication 4
caractérisée en cela que le tube aspirant (2) est formé par deux tubes aspirants séparés l'un de l'autre (2a, 2b) qui possède chacun sa propre tête de dragage aspirante (3a, 3b), les deux tubes aspirants (2a, 2b) et leur tête de dragage aspirant (3a, 3b) pouvant être utilisés indépendamment l'un de l'autre pour convoyer des sédiments.

6. Drague porteuse selon la revendication 5
caractérisée en cela que les deux têtes de dragage aspirantes (3a, 3b) présentent un carter commun et sont divisées dans leur structure intérieure en deux têtes aspirantes fonctionnant indépendamment l'une de l'autre et que les deux tubes aspirants (2a, 2b) sont reliés par plusieurs éléments de liaisons (17) sur toute leur longueur.

7. Procédé de dragage par aspiration des fonds de cours d'eau en utilisant une drague porteuse selon l'une ou plusieurs des revendications précédentes
caractérisé en cela que les suspensions d'eau sédimentaires (5) convoyées par une tête de dragage aspirante (3) et un tube aspirant (2) sont convoyées respectivement par un système d'évacuation (10) vers les sorties de transport de sédiment (5) se trouvant sur chaque côté extérieur du bateau et sont reconduits dans les couches supérieures du cours d'eau pour la dérive des sédiments et/ou à l'aide du dispositif de chargement de la drague (11) sont placés sur les dragues de bâbord ou de tribord, en fonction des circonstances, l'amob convoyé étant également déplacé à la dérive via la sortie de transport des sédiments (7).

8. Procédé selon la revendication 7
selon lequel la matière de dragage convoyée (5) est conduite à l'aide des coulisseaux placés dans le système d'évacuation (10) et/ou sur le raccord de sortie des pompes de dragage (6) à bâbord ou à tribord, en tant que chargement de dragage, amob ou suspension d'eau sédimentaire (5).
